# EUROPÄISCHE PATENTSCHRIFT

(11) **EP 2 246 240 B1**
(45) Veröffentlichungstag und Bekanntmachung des Hinweises auf die Patenterteilung: **11.09.2013**
(21) Anmeldenummer: 10001920.7
(22) Anmeldetag: 25.02.2010
(51) Int. Cl.: B62D 21/02, B62D 21/11, B62D 21/12

(54) **Trägeranordnung für einen Fahrzeugrahmen eines Nutzfahrzeuges**
Support assembly for the chassis of a commercial vehicle
Agencement de support pour un châssis de véhicule utilitaire

(30) Priorität: 02.05.2009 DE 102009019787
(43) Veröffentlichungstag der Anmeldung: 03.11.2010
(73) Patentinhaber: MAN Truck & Bus AG, 80995 München (DE)
(72) Erfinder: Hornsmann, Martin, 81541 München (DE); Rossol, Martin, 80997 München (DE)

(56) Entgegenhaltungen:
- WO-A1-2010/030257
- DE-A1- 19 643 001
- DE-A1-102006 041 664
- FR-A1- 2 590 220

## Beschreibung

Die Erfindung betrifft eine Trägeranordnung für einen Fahrzeugrahmen eines Nutzfahrzeuges nach dem Oberbegriff des Anspruchs 1.

Derartige Trägeranordnungen für Nutzfahrzeuge sind allgemein bekannt. So ist beispielsweise aus der DE 10 2006 041 664 A1 eine Trägeranordnung für einen Fahrzeugrahmen eines Nutzfahrzeuges bekannt, bei dem ein zwischen zwei Rahmenlängsträgern des Fahrzeugrahmens verlaufender Querträger vorgesehen ist, der im montierten Zustand mittels Querträger-Anbindungsbereichen mittelbar oder unmittelbar an Konsolen-Anbindungsbereichen der beiden Rahmenlängsträger angebunden ist. Konkret ist hier der Querträger mittels auf gegenüberliegende Querträgerenden aufsteckbaren Trägerteilen an Rahmenlängsträgern festgelegt. Das Einstecken des Querträgers in die Trägerteile erfolgt in Verbindung mit sogenannten Stützschuhen, in denen der Querträger mittels einer Schraubverbindung festgelegt ist. Die beiden Trägerteile der Trägeranordnung weisen eine Mehrzahl von Befestigungsstellen auf, die Gewindebohrungen umfassen, an welche weitere Funktionsbaugruppen, insbesondere Dreieckslenker, Stabilisatoren, FederDämpfer-Elemente oder Lenker der Achsanordnung einer Hinterachse beziehungsweise Hinterachsbaugruppe befestigt werden können.

Ein Nachteil eines derartigen herkömmlichen Aufbaus liegt darin, dass sich mit einem derartigen Querträgeraufbau Probleme bei der Montage hinsichtlich eventueller Fertigungstoleranzen ergeben können, so dass gegebenenfalls ein erhöhter Kraftaufwand zur Montage des Querträgers erforderlich ist, gegebenenfalls sogar in Verbindung mit einem Spreizen der Rahmenlängsträger. Diese Maßnahme ist ersichtlich aufwendig. Des Weiteren kann ein weiterer Nachteil darin gesehen werden, dass zum Beispiel bei einer Austauschnotwendigkeit des Querträgers die gesamte Querträgerbaugruppe mitsamt den Trägerteilen vom Fahrzeugrahmen abmontiert werden muss, um den Querträger austauschen zu können. Gegebenenfalls ist auch hierzu wiederum ein Spreizen der Rahmenlängsträger erforderlich, um einen Ausbau bewerkstelligen zu können.

Aus der DE 196 43 001 A1 ist eine Radaufhängung für Kraftfahrzeuge, mit zumindest einem Lenker und einer mit dem Lenker über Knotenbleche ecksteif verbundenen Strebe, insbesondere einer Verbundlenkerachse für die Hinterräder von Kraftfahrzeugen mit zwei Längslenkern und einer dieser verbindenden tordierbaren, biegesteifen Querstrebe bekannt. Die Radaufhängung ist zur Erzielung einer leichten und dennoch robusten Konstruktion der Lenker aus Leichtmetall mit einem offenen Profilteil und einem Schließblech hergestellt, wobei die Knotenbleche zumindest teilweise an das Schließblech und an den Lenker angeformt sind.

Es ist Aufgabe der vorliegenden Erfindung, eine Trägeranordnung für einen Fahrzeugrahmen eines Nutzfahrzeuges zur Verfügung zu stellen, mittels der ein Querträger, insbesondere ein achsführender Querträger, auf einfache Weise montiert und, falls notwendig, auch wieder ausgetauscht werden kann.

Diese Aufgabe wird gelöst mit den Merkmalen des Anspruchs 1.

Gemäß Anspruch 1 weist eine Trägeranordnung für einen Fahrzeugrahmen eines Nutzfahrzeuges einen zwischen zwei Rahmenlängsträgern des Fahrzeugrahmens verlaufenden Querträger, insbesondere einen achsführenden Querträger, auf, der im montierten Zustand mittels Querträger-Anbindungsbereichen mittelbar oder unmittelbar an Konsolen-Anbindungsbereichen der beiden Rahmenlängsträger angebunden ist, wobei diese Anbindung vorzugsweise lösbar erfolgt. Erfindungsgemäß ist wenigstens einer der Querträger-Anbindungsbereiche, bevorzugt jedoch beide Querträger-Anbindungsbereiche, und damit auch der jeweils zugeordnete Konsolen-Anbindungsbereich unter einem vorgegebenen Winkel gegen wenigstens die Querträgerlängsrichtung geneigt. Gemäß einer besonders bevorzugten Ausgestaltung hierzu ist die Neigung dergestalt ausgebildet, dass die gegenüberliegenden Querträger-Anbindungsbereiche und damit die jeweils zugeordneten Konsolen-Anbindungsbereiche V-artig beziehungsweise pfeilartig zueinander angestellt sind.

Eine derartige winklige Anstellung wenigstens eines, bevorzugt beider Querträger-Anbindungsbereiche ermöglicht eine besonders schnelle und problemlose Montage des Querträgers, und zwar ohne dass die Rahmenlängsträger hierfür gespreizt werden müssen. Durch die winklige Anstellung der Querträger-Anbindungsbereiche kann somit auf einfache Weise sichergestellt werden, dass der Querträger in einer definierten Montagerichtung einfachst auf die entsprechend zugeordneten Konsolen-Anbindungsbereiche aufgesetzt beziehungsweise an diesen angelegt werden kann. Ein kompliziertes Einfädeln des Querträgers in den Konsolen-Anbindungsbereich kann hierbei entfallen.

Des weiteren sind die gegenüberliegenden Querträger-Anbindungsbereiche und damit die diesem zugeordneten Konsolen-Anbindungsbereiche in Montagerichtung nach hinten, bevorzugt in Richtung auf einen Mehrpunktlenker oder dergleichen zu gepfeilt, so dass der Querträger bei der Montage mit seinen V-schenkelartig verlaufenden Querträger-Anbindungsbereichen auf einfache Weise von der den gegebenenfalls vorgesehenen Mehrpunktlenker gegenüberliegenden Seite her an die V-schenkelartig verlaufenden Konsolen-Anbindungsbereiche angesetzt beziehungsweise aufgesetzt und angebunden werden kann. Damit ist auch in Verbindung mit beispielsweise einer Mehrpunktlenkeranbindung im Querträgerbereich, wie dies nachfolgend noch näher erläutert wird, eine einfache und gute Querträger-Zugänglichkeit im Rahmen der Montage beziehungsweise gegebenenfalls auch des Ausbaus des Querträgers gegeben.

Als Mehrpunktlenker kann beispielsweise ein Vierpunkt- oder X-Lenker oder alternativ hierzu ein Dreiecklenker vorgesehen sein.

Besonders bevorzugt ist hier eine Ausgestaltung der Erfindung, bei der die gegenüberliegenden Querträger-Anbindungsbereiche und damit die diesen zugeordneten Konsolen-Anbindungsbereiche mit einem gleichen Winkel gegen die Querträgerlängsachse geneigt sind. Dadurch wird bevorzugt ein insgesamt symmetrischer Aufbau zur Verfügung gestellt, mit dem die Montage des Querträgers beziehungsweise gegebenenfalls die Demontage des Querträgers auf einfache und übersichtliche Weise schnell und problemlos vorgenommen werden kann. Diese symmetrische Ausbildung hat ferner den Vorteil, dass die dann jeweils links- und rechtsseitigen Anbindungsbereiche am Querträger beziehungsweise an den rahmenlängsträgerseitigen Konsolen als Gleichteile ausgebildet werden können.

Gemäß einer bevorzugten konkreten Ausgestaltung ist der Querträger-Anbindungsbereich als Querträger-Flanschbereich ausgebildet, mittels dem der Querträger an dem jeweils zugeordneten Konsolen-Anbindungsbereich festlegbar ist. Die Festlegung erfolgt dabei bevorzugt mittels wenigstens einer Kraftschlussverbindung, insbesondere wenigstens einer Schraubverbindung, um neben einer zuverlässigen Festlegung auch eine einfache Lösungsmöglichkeit zum Ausbau des Querträgers zur Verfügung zu stellen. Insbesondere durch Schraubverbindungen kann auch ein einfacher und zuverlässiger Toleranzausgleich ermöglicht werden.

Bevorzugt ist der Querträger im montierten, mittels bezogen auf die Querträgerlängsrichtung gegenüberliegenden und die Konsolen-Anbindungsbereiche ausbildenden Trägerkonsolen an den Rahmenlängsträgern festgelegt. Diese Trägerkonsolen können integral mit den Rahmenlängsträgern ausgebildet sein. Besonders bevorzugt sind die Trägerkonsolen jedoch als separate, mittelbar oder unmittelbar mit den Rahmenlängsträgern verbindbare Bauteile ausgebildet. Auch hier erfolgt die Festlegung bevorzugt wieder mittels wenigstens einer Kraftschlussverbindung, die wiederum gemäß einer besonders bevorzugten Ausgestaltung als Schraubverbindung ausgebildet ist. Mit derartigen Trägerkonsolen ist eine besonders einfache Ausbildung der winklig angestellten Konsolen-Anbindungsbereiche möglich. Zudem können in Verbindung mit den als separaten Bauteilen ausgebildeten Trägerkonsolen zuerst die Trägerkonsolen an den Rahmenlängsträgern montiert werden, während anschließend aufgrund der bevorzugt V-artig oder pfeilartig angestellten Konsolen-Anbindungsbereiche der Querträger mit seinen entsprechend ausgebildeten Querträger-Anbindungsbereichen auf einfache Weise und zum Beispiel unter Toleranzausgleich aufgesetzt und festgelegt werden kann.

Der Konsolen-Anbindungsbereich der jeweiligen Trägerkonsole ist bevorzugt durch einen Konsolen-Flanschbereich gebildet, an dem der Querträger mittels des jeweiligen Querträger-Flanschbereichs festgelegt werden kann. Auch hier erfolgt die Festlegung bevorzugt wieder mittels einer Kraftschlussverbindung, die bevorzugt als Schraubverbindung ausgelegt ist. Gemäß einer besonders bevorzugten konkreten Ausgestaltung hierzu ist vorgesehen, dass die Flanschbereiche durch Flanschplatten ausgebildet sind, die jeweils ein definiertes Schraublochbild aufweisen. Mittels derartiger Flanschplatten ist ein besonders einfaches Ansetzen und Ausrichten des Querträgers an den bevorzugten Trägerkonsolen, insbesondere auch ein einfacher Toleranzausgleich möglich.

Gemäß einer weiteren besonders bevorzugten Ausgestaltung des Querträgers als achsführender Querträger ist vorgesehen, dass die Trägerkonsole zusätzlich wenigstens eine Funktionsteil-Anbindungsstelle aufweist, an der ein definiertes, an sich beliebiges Funktionsteil angebunden werden kann. Dieses Funktionsteil ist jedoch bevorzugt durch einen Mehrpunktlenker gebildet, insbesondere durch einen Vierpunkt- oder X-Lenker. Alternativ dazu kann der Mehrpunktlenker aber auch durch einen Dreiecklenker gebildet sein. Die Anbindung der Lenkerarme an den Trägerkonsolen erfolgt dabei bevorzugt mittels Elastomerlagern, zum Beispiel Gummi-Metall-Lagerelementen.

Für eine besonders platzsparende Anlenkung ist vorgesehen, dass der Lenkeranbindungspunkt an der Trägerkonsole zwischen einem dem Rahmenlängsträger zugewandten längsträgerseitigen Anbindungsbereich und den dem Querträger zugeordneten Konsolen-Anbindungsbereich ausgebildet und angeordnet ist.

Die Anmelderin behält sich die Einreichung von Verfahrensansprüchen bezüglich der Montage und gegebenenfalls des Austausches des Querträgers ausdrücklich vor.

Die Erfindung wird nachfolgend anhand einer Zeichnung näher erläutert.

Es zeigen:
- Fig. 1: schematisch einen Rahmenlängsträger eines Fahrzeugrahmens mit montierter erfindungsgemäßer Querträgeranordnung,
- Fig. 2: schematisch eine perspektivische Darstellung der erfindungsgemäßen Querträgeranordnung im montierten Zustand, und
- Fig. 3: schematisch die Demontage des Querträgers von der in der Fig. 1 und Fig. 2 dargestellten Querträgeranordnung.

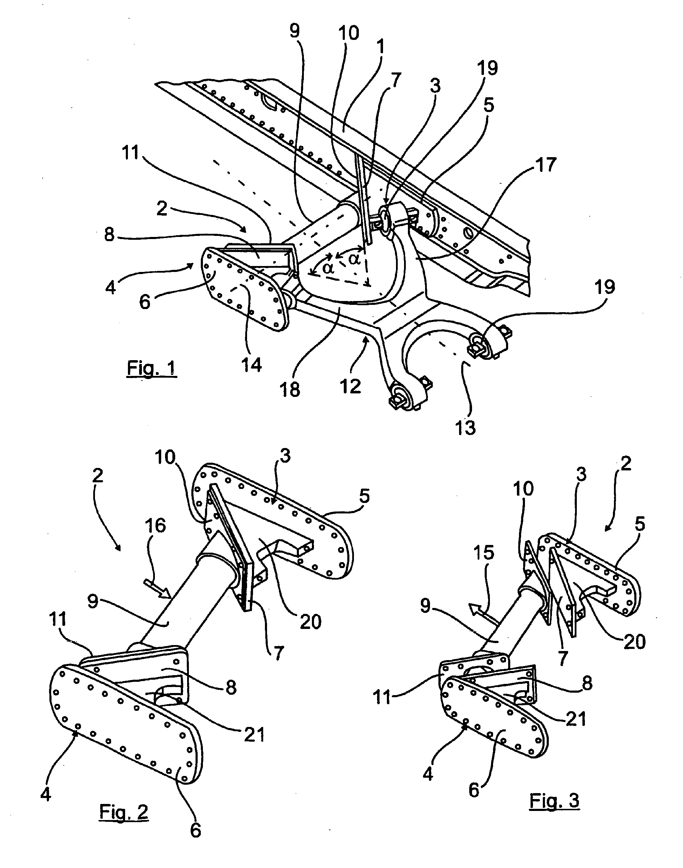

In der Fig. 1 ist schematisch ein Rahmenlängsträger 1 eines Fahrzeugrahmens eines Nutzfahrzeuges gezeigt, an dem eine erfindungsgemäße Trägeranordnung 2 angebunden ist. Diese erfindungsgemäße Trägeranordnung 2 ist zwischen dem gezeigten Rahmenlängsträger 1 und einem hier aus Übersichtlichkeitsgründen ausgeblendeten linken und im betrachteten Bereich im wesentlichen identisch ausgebildeten Rahmenlängsträger verbaut, was nachfolgend noch näher erläutert wird.

Die erfindungsgemäße Trägeranordnung 2 umfasst zwei an den gegenüberliegenden Rahmenlängsträgern angebundene Trägerkonsolen 3, 4. Die Anbindung der Trägerkonsolen 3, 4 an die Rahmenlängsträger 1 erfolgt hierbei über jeweils einen als Flanschplatte 5, 6 ausgebildeten Trägerkonsolen-Anbindungsbereich mittels mehrerer hier nicht im Detail gezeigter lösbarer beziehungsweise nicht lösbarer Verbindungen.

Die Trägerkonsolen 3, 4 weisen zudem auf der den rahmenlängsträgerseitigen Flanschplatten abgewandten Seite jeweils eine einen Konsolen-Anbindungsbereich ausbildende Konsolen-Flanschplatte 7, 8 auf, über die ein Querträger 9 in noch detailliert zu beschreibender Weise über entsprechend zugeordnete und Querträger-Anbindungsbereiche ausbildende Querträger-Flanschplatten 10, 11 mittels eines Mehrzahl von hier nicht im Detail dargestellten Schraubverbindungen lösbar und austauschbar festgelegt ist.

Wie dies insbesondere auch aus den Fig. 2 und 3 ersichtlich ist, sind die beiden querträgerseitigen Querträger-Flanschplatten 10, 11 und damit entsprechend die diesen zugeordneten trägerkonsolenseitigen Konsolen-Flanschplatten 7, 8 jeweils in Richtung zu einem Mehrpunktlenker 12 hin pfeilartig beziehungsweise V-artig zueinander winklig angestellt. Die winklige Anstellung erfolgt hierbei so, dass die einander zugeordnete Konsolen-Flanschplatte 7 und Querträger-Flanschplatte 10 einerseits sowie die einander zugeordnete Konsolen-Flanschplatte 8 und die Querträger-Flanschplatte 11 andererseits jeweils bezüglich einer zwischen den beiden Rahmenlängsträgern 1 in Fahrzeuglängsrichtung verlaufenden Symmetrieachse 13 symmetrisch ausgebildet sind und somit unter einem jeweils gleichen Winkel gegen eine Querträgerlängsachse 14 geneigt sind. Durch eine derartige symmetrische Anordnung werden sowohl bei der linksseitigen als auch bei der rechtsseitigen Querträgeranbindung an die Trägerkonsolen 3, 4 jeweils gleiche Montage- und Ausbauverhältnisse zur Verfügung gestellt, was den Montagevorgang und auch den Austauschvorgang wesentlich vereinfacht und erleichtert. Die V-artige Pfeilung der winkligen Anstellung der Querträger-Flanschplatten 10, 11 und damit der Konsolen-Flanschplatten 7, 8 ist in der Fig. 1 zudem noch schematisch durch die beiden hier bevorzugt identischen Winkel α mit Bezug auf die Symmetrieachse 13 eingezeichnet.

Hinsichtlich der Symmetrie gilt das Gleiche bevorzugt auch für die Trägerkonsolen 3, 4 und deren Anbindung über die rahmenlängsträgerseitigen Flanschplatten 5, 6 an dem jeweils zugeordneten Rahmenlängsträger 1.

Wie dies insbesondere aus der Fig. 2 ersichtlich ist, kann im Rahmen der Montage der Querträger 9 einfachst entsprechend der Richtung des Pfeils 16, quasi von vorne her, auf beziehungsweise an die entsprechenden Konsolen-Flanschplatten 7, 8 aufbeziehungsweise angesetzt werden, ohne dass dies zu Verklemmungen beziehungsweise zu Verspreizungen führt, da bei einem derartigen Aufsetzen zudem über die entsprechenden Lochbilder der einander zugeordneten Flanschplatten ein einfacher Toleranzausgleich möglich ist. Das Aufspreizen der Rahmenlängsträger kann daher mit der erfindungsgemäßen Lösung auf einfache Weise vermieden werden.

Wie dies insbesondere aus der Fig. 2 ersichtlich ist, kann zudem durch die pfeilartige beziehungsweise V-artige Anstellung der Querträger-Flanschplatten 10, 11 und der diesen zugeordneten Konsolen-Flanschplatten 7, 8 auf einfache Weise ein Austausch des Querträgers 9 bewerkstelligt werden, da aufgrund der winkligen Anstellung der Flanschplatten nach einem Lösen der entsprechenden Schraubverbindungen der Querträger 9, wie in der Fig. 3 durch den Pfeil 15 schematisch eingezeichnet, einfach in Pfeilrichtung "herausgezogen" werden kann.

Wie dies den Fig. 1 bis 3 weiter entnommen werden kann, handelt es sich bei dem hier dargestellten Querträger 9 um einen achsführenden Querträger. Das heißt, dass an den mit dem Querträger 9 verbundenen Trägerkonsolen 3, 4 noch der bereits zuvor genannte Mehrpunktlenker 12 angelenkt ist. Diese Anlenkung erfolgt über an den Lenkerarmen 17, 18 angeordnete Elastomerlager 19, und zwar in einem Bereich zwischen den rahmenlängsträgerseitigen Flanschplatten 5, 6 und den Konsolen-Flanschplatten 7, 8. Konkret ist dieser Zwischenbereich hier als Zwischensteg 20, 21 ausgebildet, an dem die Elastomerlager 19 der Lenkerarme 17, 18 über entsprechende, hier nicht dargestellte Schraubverbindungen festlegbar sind.

Die einzelnen Bestandteile der Trägeranordnung 2 können auf unterschiedliche Weise gefertigt werden. So können beispielsweise die Trägerkonsolen 3, 4 gegossen werden. Der Querträger 9 selber kann zum Beispiel als Hohlprofil ausgebildet sein und zum Beispiel aus Stahl gefertigt sein.

Die Lochbilder der einander zugeordneten Anbindungsbereiche sind hier in üblicher Weise so gewählt, dass durch fluchtende Löcher eine zum Beispiel Schraubverbindung durchgeschraubt werden kann. Für einen Toleranzausgleich sind dabei wenigstens einzelne der Löcher mit einem Übermaß gefertigt oder die Löcher so nahe beieinander angeordnet, dass bei toleranzbedingten Abweichungen das jeweils passende und fluchtende zum Beispiel benachbarte Loch ausgewählt werden kann.

## Patentansprüche

1. Trägeranordnung (2) für einen Fahrzeugrahmen eines Nutzfahrzeuges mit einem zwischen zwei Rahmenlängsträgern (1) des Fahrzeugrahmens verlaufenden Querträger (9), insbesondere einem achsführenden Querträger, der im montierten Zustand mittels Querträger-Anbindungsbereichen (10,11) mittelbar oder unmittelbar an Konsolen-Anbindungsbereichen (7,8) der beiden Rahmenlängsträger (1) angebunden ist, insbesondere lösbar angebunden ist,
wobei wenigstens einer der Querträger-Anbindungsbereiche (10, 11), bevorzugt beide Querträger-Anbindungsbereiche (10, 11), und damit der jeweils zugeordnete Konsolen-Anbindungsbereich (7, 8) unter einem vorgegebenen Winkel gegen wenigstens die Querträgerlängsrichtung (14) geneigt ist, insbesondere dergestalt, dass die gegenüberliegenden Querträger-Anbindungsbereiche (10, 11) und damit die jeweils zugeordneten Konsolen-Anbindungsbereiche (7, 8) V-artig oder pfeilartig zueinander angestellt sind,
**dadurch gekennzeichnet,**
**dass** die gegenüberliegenden Querträger-Anbindungsbereiche (10, 11) und damit die diesen zugeordneten Konsolen-Anbindungsbereiche (7, 8) in Richtung auf einen Mehrpunktlenker (12) oder dergleichen gepfeilt sind dergestalt, dass der Querträger (9) bei der Montage mit seinen V-schenkelartig verlaufenden Querträger-Anbindungsbereichen (10, 11) auf die V-schenkelartig verlaufenden Konsolen-Anbindungsbereiche (7, 8) aufsetzbar und/oder dort anlegbar ist.

2. Trägeranordnung nach Anspruch 1, **dadurch gekennzeichnet, dass** die gegenüberliegenden Querträger-Anbindungsbereiche (10, 11) und damit die diesen zugeordneten Konsolen-Anbindungsbereiche (7, 8) mit einem gleichen Winkel gegen die Querträger-Längsachse (14) geneigt und/oder symmetrisch und/oder als Gleichteile ausgebildet sind.

3. Trägeranordnung nach einem der Ansprüche 1 oder 2, **dadurch gekennzeichnet, dass** der Querträger-Anbindungsbereich (10, 11) als Querträger-Flanschbereich ausgebildet ist, mittels dem der Querträger (9) an dem jeweils zugeordneten Konsolen-Anbindungsbereich (7, 8) festlegbar, insbesondere mittels wenigstens einer Kraftschlussverbindung lösbar festlegbar ist.

4. Trägeranordnung nach einem der Ansprüche 1 bis 3, **dadurch gekennzeichnet, dass** der Querträger (9) im montierten Zustand mittels bezogen auf die Querträgerlängsrichtung (14) gegenüberliegenden und die Konsolen-Anbindungsbereiche (7, 8) ausbildenden Trägerkonsolen (3, 4) an den Rahmenlängsträgern (1) festgelegt ist.

5. Trägeranordnung nach Anspruch 3 und 4, **dadurch gekennzeichnet, dass** der Konsolen-Anbindungsbereich (7, 8) der jeweiligen Trägerkonsole (3, 4) durch einen Konsolen-Flanschbereich gebildet ist, an dem der Querträger (9) mittels des jeweiligen Querträger-Flanschbereiches festlegbar ist, insbesondere mittels wenigstens einer Kraftschluss-, bevorzugt Schraubenverbindung lösbar festlegbar ist.

6. Trägeranordnung nach Anspruch 5, **dadurch gekennzeichnet, dass** die Flanschbereiche durch ein definiertes Schraublochbild aufweisende Flanschplatten ausgebildet sind.

7. Trägeranordnung nach einem der Ansprüche 4 bis 6, **dadurch gekennzeichnet, dass** die Trägerkonsolen (3, 4) als separate, mittelbar oder unmittelbar mit den Rahmenlängsträgern (1) verbindbare, insbesondere mittels wenigstens einer Kraftschlussverbindung lösbar verbindbare, Bauteile ausgebildet sind.

8. Trägeranordnung nach einem der Ansprüche 4 bis 7, **dadurch gekennzeichnet, dass** die Trägerkonsole (3, 4) zusätzlich wenigstens eine Funktionsteil-Anbindungsstelle aufweist, an der ein definiertes Funktionsteil anbindbar ist.

9. Trägeranordnung nach einem der Ansprüche 1 bis 8, **dadurch gekennzeichnet, dass** der Querträger (9) ein achsführender Querträger ist.

10. Trägeranordnung nach Anspruch 8 und 9, **dadurch gekennzeichnet, dass** das Funktionsteil durch einen Mehrpunktlenker (12), insbesondere durch einen Vierpunkt- oder X-Lenker oder durch einen Dreiecklenker, gebildet ist.

11. Trägeranordnung nach einem der Ansprüche 4 bis 10, **dadurch gekennzeichnet, dass** der Lenkeranbindungspunkt (20, 21) an der Trägerkonsole (3, 4) zwischen einem dem Rahmenlängsträger (1) zugewandten längsträgerseitigen Anbindungsbereich (5, 6) und dem dem Querträger (9) zugewandten Konsolen-Anbindungsbereich (7, 8) ausgebildet und angeordnet ist.

## Claims

1. Carrier arrangement (2) for a vehicle frame of a commercial vehicle having a crossmember (9) which runs between two frame longitudinal carriers (1) of the vehicle frame, in particular an axle-guiding crossmember which, in the mounted state, is attached, in particular is attached releasably, indirectly or directly to bracket attaching regions (7, 8) of the two frame longitudinal carriers (1) by means of crossmember attaching regions (10, 11), at least one of the crossmember attaching regions (10, 11), preferably both crossmember attaching regions (10, 11), and therefore the respectively associated bracket attaching region (7, 8) being inclined at a predefined angle with respect at least to the crossmember longitudinal direction (14), in particular in such a way that the crossmember attaching regions (10, 11) which lie opposite one another and therefore the respectively associated bracket attaching regions (7, 8) are set with respect to one another in a V-type or arrow-type manner, **characterized in that** the crossmember attaching regions (10, 11) which lie opposite one another and therefore the bracket attaching regions (7, 8) which are assigned to them are tapered in the direction of a multi-point link (12) or the like in such a way that, during assembly, the crossmember (9) can be placed onto the bracket attaching regions (7, 8) which run in a V-limb-like manner, and/or can be positioned there, by way of its crossmember attaching regions (10, 11) which run in a V-limb-like manner.

2. Carrier arrangement according to Claim 1, **characterized in that** the crossmember attaching regions (10, 11) which lie opposite one another and therefore the bracket attaching regions (7, 8) which are assigned to them are inclined at an identical angle with respect to the crossmember longitudinal axis (14) and/or are configured symmetrically and/or as identical parts.

3. Carrier arrangement according to either of Claims 1 and 2, **characterized in that** the crossmember attaching region (10, 11) is configured as a crossmember flange region, by means of which the crossmember (9) can be fixed at the respectively associated bracket attaching region (7, 8), in particular can be fixed releasably by means of at least one non-positive connection.

4. Carrier arrangement according to one of Claims 1 to 3, **characterized in that**, in the assembled state, the crossmember (9) is fixed to the frame longitudinal carriers (1) by means of carrier brackets (3, 4) which lie opposite one another in relation to the crossmember longitudinal direction (14) and form the bracket attaching regions (7, 8).

5. Carrier arrangement according to Claims 3 and 4, **characterized in that** the bracket attaching region (7, 8) of the respective carrier bracket (3, 4) is formed by a bracket flange region, to which the crossmember (9) can be fixed by means of the respective crossmember flange region, in particular can be fixed releasably by means of at least one non-positive connection, preferably screw connection.

6. Carrier arrangement according to Claim 5, **characterized in that** the flange regions are formed by flange plates which have a defined screw-hole pattern.

7. Carrier arrangement according to one of Claims 4 to 6, **characterized in that** the carrier brackets (3, 4) are configured as separate components which can be connected indirectly or directly to the frame longitudinal carriers (1), in particular can be connected releasably by means of at least one non-positive connection.

8. Carrier arrangement according to one of Claims 4 to 7, **characterized in that** the carrier bracket (3, 4) additionally has at least one functional-part attaching point, to which a defined functional part can be attached.

9. Carrier arrangement according to one of Claims 1 to 8, **characterized in that** the crossmember (9) is an axle-guiding crossmember.

10. Carrier arrangement according to Claims 8 and 9, **characterized in that** the functional part is formed by a multi-point link (12), in particular by a four-point link or X-link or by a triangular link.

11. Carrier arrangement according to one of Claims 4 to 10, **characterized in that** the link attaching point (20, 21) is formed and arranged on the carrier bracket (3, 4) between an attaching region (5, 6) on the longitudinal-carrier side which faces the frame longitudinal carrier (1) and the bracket attaching region (7, 8) which faces the crossmember (9).

## Revendications

1. Agencement de support (2) pour un châssis de véhicule utilitaire, comprenant une traverse (9) s'étendant entre deux longerons de châssis (1) du châssis de véhicule, en particulier une traverse de guidage d'essieu qui, à l'état monté, est connectée en particulier de manière amovible directement ou indirectement à des régions de connexion de console (7, 8) des deux longerons de châssis (1) au moyen de régions de connexion de traverse (10, 11),
au moins l'une des régions de connexion de traverse (10, 11), de préférence les deux régions de connexion de traverse (10, 11), et par conséquent la région de connexion de console (7, 8) respectivement associée étant inclinées suivant un angle prédéfini par rapport à au moins la direction longitudinale de la traverse (14), en particulier de telle sorte que les régions de connexion de traverse opposées (10, 11) et par conséquent les régions de connexion de console (7, 8) respectivement associées soient orientées à la manière d'un V ou à la manière d'une flèche les unes par rapport aux autres,
**caractérisé en ce que**
les régions de connexion de traverse opposées (10, 11) et par conséquent les régions de connexion de console (7, 8) associées à celles-ci sont en forme de flèche en direction d'un bras oscillant à plusieurs points (12) ou similaire de telle sorte que, lors du montage, la traverse (9) puisse être placée par ses régions de connexion de traverse (10, 11) s'étendant à la manière d'une branche de V sur les régions de connexion de console (7, 8) s'étendant à la manière d'une branche de V et/ou puisse y être appliquée.

2. Agencement de support selon la revendication 1, **caractérisé en ce que** les régions de connexion de traverse opposées (10, 11) et par conséquent les régions de connexion de console (7, 8) associées à celles-ci sont inclinées suivant un angle identique par rapport à l'axe longitudinal de la traverse (14) et/ou sont réalisées de manière symétrique et/ou sont réalisées sous forme de parties identiques.

3. Agencement de support selon l'une quelconque des revendications 1 et 2, **caractérisé en ce que** la région de connexion de traverse (10, 11) est réalisée sous forme de région de bride de traverse au moyen de laquelle la traverse (9) peut être fixée à la région de connexion de console (7, 8) respectivement associée, en particulier peut être fixée de manière amovible au moyen d'au moins une liaison par engagement par force.

4. Agencement de support selon l'une quelconque des revendications 1 à 3, **caractérisé en ce qu'**à l'état monté, la traverse (9) est fixée aux longerons de châssis (1) au moyen de consoles de support (3, 4) opposées par rapport à la direction longitudinale de la traverse (14) et formant les régions de connexion de console (7, 8).

5. Agencement de support selon les revendications 3 et 4, **caractérisé en ce que** la région de connexion de console (7, 8) de la console de support respective (3, 4) est formée par une région de bride de console sur laquelle peut être fixée la traverse (9) au moyen de la région de bride de traverse respective, en particulier peut être fixée de manière amovible au moyen d'au moins une liaison par engagement par force, de préférence d'une liaison par vissage.

6. Agencement de support selon la revendication 5, **caractérisé en ce que** les régions de bride sont réalisées par des plaques de bride comprenant un motif de trous de vis défini.

7. Agencement de support selon l'une quelconque des revendications 4 à 6, **caractérisé en ce que** les consoles de support (3, 4) sont réalisées sous forme de parties structurales séparées pouvant être reliées directement ou indirectement aux longerons de châssis (1), en particulier pouvant être reliées de manière amovible au moyen d'au moins une liaison par engagement par force.

8. Agencement de support selon l'une quelconque des revendications 4 à 7, **caractérisé en ce que** la console de support (3, 4) comprend en outre au moins un point de connexion de partie fonctionnelle au niveau duquel une partie fonctionnelle définie peut être connectée.

9. Agencement de support selon l'une quelconque des revendications 1 à 8, **caractérisé en ce que** la traverse (9) est une traverse de guidage d'essieu.

10. Agencement de support selon les revendications 8 et 9, **caractérisé en ce que** la partie fonctionnelle est formée par un bras oscillant à plusieurs points (12), en particulier par un bras oscillant à quatre points ou en X ou par un bras oscillant triangulaire.

11. Agencement de support selon l'une quelconque des revendications 4 à 10, **caractérisé en ce que** le point de connexion de bras oscillant (20, 21) est réalisé et disposé sur la console de support (3, 4) entre une région de connexion (5, 6) située du côté du longeron et tournée vers le longeron de châssis (1) et la région de connexion de console (7, 8) tournée vers la traverse (9).
